# EUROPÄISCHE PATENTSCHRIFT

(11) **EP 2 555 254 B1**
(45) Veröffentlichungstag und Bekanntmachung des Hinweises auf die Patenterteilung: **11.03.2015**
(21) Anmeldenummer: 12178773.3
(22) Anmeldetag: 01.08.2012
(51) Int. Cl.: H01L 31/048

(54) **Flachdach-Montagesystem für Photovoltaik-Module**
Flat roof installation system for photovoltaic modules
Système de montage à toit plat pour modules photovoltaïques

(30) Priorität: 04.08.2011 DE 102011109772
(43) Veröffentlichungstag der Anmeldung: 06.02.2013
(73) Patentinhaber: Creotecc GmbH, 79108 Freiburg (DE)
(72) Erfinder: Walz, Leo, 79117 Freiburg (DE); Johner, Fabian, 79235 Bickensohl (DE)
(74) Vertreter: Witte, Weller & Partner Patentanwälte mbB

(56) Entgegenhaltungen:
- DE-U1-202008 014 274
- DE-U1-202009 018 151
- DE-U1-202010 000 557
- DE-U1-202010 008 691
- DE-U1-202012 005 673

## Beschreibung

Die vorliegende Erfindung betrifft ein Montagesystem zur Positionierung von mindestens einem Photovoltaik-Modul (nachfolgend auch kurz "PV-Modul" genannt) einer PV-Moduleinheit auf einem ebenen Flachdach in einer relativ zu dem Flachdach in einem Winkel (Alpha) geneigten Stellung.

Es gibt herkömmliche Flachdach-Montagesysteme, die seitlich und hinten offen sind, wobei senkrecht zum Dach hinter dem System beabstandet ein Ablenkblech aufgestellt wird, um zu vermeiden, dass Wind, der aus der Richtung der Rückseite bläst, unter das PV-Modul greift. Diese Systeme sind seitlich offen.

Des Weiteren gibt es Systeme, die schürzenähnlich ausgebildet sind und von hinten um das Montagesystem herumgeführt werden, ähnlich einer Verkleidung eines nach hinten offenen Keils.

Ferner gibt es Systeme, die einen Firstspalt aufweisen. Der Firstspalt ist so ausgestaltet, dass das entsprechende Montagesystem einen Unterdruck unter dem PV-Modul erzeugt, wenn der Wind aus südlicher Richtung bläst. Sobald der Wind aus einer leicht anderen Richtung, insbesondere aus Norden, bläst, gibt keinen aerodynamischen Effekt mehr. Ein derartiges System ist aus der DE 20 2009 018 151 U1 bekannt.

Andere Systemhersteller begegnen der Abhebeproblematik damit, dass die Montagegestelle mit einer zusätzlichen Ballastierung versehen werden. Eine zusätzliche Ballastierung ist nachteilig, weil viele (ältere) Flachdachbauten nur eine begrenzte Flächentragkraft aufweisen, die derartig schwere bzw. beschwerte Montagesysteme nicht tragen.

Es ist daher eine Aufgabe der vorliegenden Erfindung, ein Montagesystem bereitzustellen, welches mittels aerodynamischer Effekte das PV-Modul bzw. das System selbst im Falle von Wind nahezu windrichtungsunabhängig auf das Flachdach presst, ohne dass das Montagesystem zusätzlich ballastiert wird.

Diese Aufgabe wird gelöst durch ein Montagesystem zur Positionierung von mindestens einem Photovoltaik-(PV-)Modul einer PV-Moduleinheit auf einem ebenen Flachdach in einer relativ zu dem Flachdach in einem Winkel Alpha geneigten Stellung, mit: einem Gestell, wobei das Gestell eine PV-Moduleinheit-Montageseite, eine Rückseite, zwei Stirnseiten und eine Unterseite definiert, die gemeinsam ein Prisma definieren, dessen Grundfläche einer der Stirnseiten entspricht, dessen Deckfläche der anderen Stirnseite entspricht und dessen Mantelflächen der Montageseite, der Rückseite und der Unterseite entsprechen, wobei die Montageseite und die Rückseite einen vorzugsweise stumpfen Winkel Beta einschließen, wobei sich die Montageseite und die Rückseite entlang einer imaginären Schnittlinie schneiden, die einen First definiert, der der Unterseite gegenüber liegt, und wobei die Unterseite in einem installierten Zustand des Montagesystems dem Flachdach gegenüber liegt; einer Seitenverkleidung für jede der Stirnseiten, wobei jede der Seitenverkleidungen die zugehörige Stirnseite abdeckt; einem Windabweiser, der an der Rückseite angebracht ist und der die Rückseite abdeckt; wobei im Bereich des Firsts zwischen dem Windabweiser und der PV-Moduleinheit, wenn die PV-Moduleinheit an der Montageseite angebracht ist, ein offener Firstspalt ausgebildet ist, der ein Inneres des Prismas mit einer äußeren Umgebung des Prismas verbindet, wobei eine senkrechte Projektion des Firstspalts auf das Flachdach einen ersten Flächeninhalt definiert; wobei in einem unteren Bereich der Montageseite zwischen dem Flachdach und der angebrachten PV-Moduleinheit ein erster offener Fußspalt ausgebildet ist und/oder in einem unteren Bereich der Rückseite zwischen dem Flachdach und dem Windabweiser ein zweiter offener Fußspalt ausgebildet ist, wobei eine senkrechte Projektion jedes Fußspalts auf eine erste imaginäre Ebene, die senkrecht zum Flachdach orientiert ist, jeweils einen zweiten Flächeninhalt definiert; wobei der erste Flächeninhalt mindestens so groß wie eine Summe von allen zweiten Flächeninhalten ist; und wobei eine Oberkante des Windabweisers und eine Oberkante der PV-Moduleinheit in einer zweiten imaginären Ebene liegen, die parallel zum Flachdach orientiert ist.

Das Montagesystem der Erfindung arbeitet nach dem Prinzip einer Wasserdüse, das heißt, sie macht sich den Venturi-Effekt zu nutze, der z.B. auch für die Funktionsweise einer Wasserstrahl-Vakuumpumpe verantwortlich ist. Das Volumen unterhalb des PV-Moduls wird aus allen Richtungen nahezu luftdicht abgeschlossen, mit Ausnahme von (vertikalen) Fußspalten, sofern vorhanden, und einem größeren (horizontalen) Firstspalt. Streicht Wind über das Modul, und zwar unabhängig aus welcher Richtung, entsteht eine Sogwirkung, die das PV-Modul auf das Flachdach presst, anstatt das PV-Modul auszuheben. Die begrenzenden Kanten des Firstspalts sind so ausgebildet, dass Wind aus keiner Richtung unter das PV-Modul geblasen werden kann. Damit funktioniert das Montagesystem der Erfindung nahezu windrichtungsunabhängig. Lediglich ein sehr schmaler Bereich einer Windrichtung um die Ost-West-Richtung herum ist mit einer geringeren Sogwirkung versehen.

Es hat sich als besonders vorteilhaft herausgestellt, wenn die Oberkanten der Elemente, die im Bereich des Firstspalts liegen, in einer Ebene liegen, die parallel zur Ebene des Dachs liegt, auf dem das Montagesystem aufgestellt wird. Diese Bedingung ist u.a. dafür verantwortlich, dass das Montagesystem der Erfindung windrichtungsunabhängig ist.

Vorzugsweise weist der Windabweiser eine Abdeckfläche und insbesondere einen Spoiler mit einer Spoilerfläche auf, wobei sich die Spoilerfläche an die Abdeckfläche anschließt und abgewinkelt zur Rückseite orientiert ist, so dass die Spoilerfläche aus der Rückseite vorsteht.

Ähnlich wie im Motorsport beeinflusst der Spoiler die Strömung der Luft, die über das aufgestellte und verkleidete Montagesystem streicht. Da das Montagesystem vorzugsweise modular ausgelegt ist, kann der Spoiler vor Ort, das heißt auf der Baustelle, so gebogen werden, dass die Oberkanten der firstspaltdefinierenden Elemente in der gleichen Ebene liegen. Alternativ können Elemente des erfindungsgemäßen Montagesystems baukastenartig vorgehalten werden, und zwar z.B. in Abhängigkeit vom Neigungswinkel α und/oder der Länge der PV-Module.

Weiter ist es von Vorteil, wenn die Spoilerfläche im installierten Zustand des Montagesystems im Wesentlichen senkrecht zum Flachdach orientiert ist.

Die Spoilerfläche definiert dann eine seitliche Begrenzung der Projektion des Firstspalts. Der Spoiler kann vom Wind nicht hintergriffen werden, so dass Aushebeeffekte reduziert sind bzw. nicht vorhanden sind.

Bei einer weiteren bevorzugten Ausgestaltung sind die Stirnseiten im Wesentlichen dreieckig ausgebildet.

Bei der Verwendung von dreieckigen Stirnseiten sind die Montageseite, die Unterseite und die Rückseite jeweils seitlich durch eine Gerade begrenzt. Dies vereinfacht den Aufbau des Systems. Es versteht sich, dass alternativ auch mehreckige Stirnseiten eingesetzt werden können, um bspw. die seitliche Kontur der Montageseite an einen gewünschten Kurvenlauf anzupassen (z.B. Flugzeugflügel-Profil).

Bei einer weiteren vorteilhaften Ausgestaltung sind die Stirnseiten parallel zueinander orientiert.

In diesem Fall reduziert sich der Windwiderstand, wenn der Wind aus der Vorzugsrichtung (aus Süden oder aus Norden) bläst. Es wird am wenigsten Material benötigt, um die Seitenverkleidung herzustellen.

Bei einer weiteren besonderen Ausgestaltung ist die Unterseite offen.

In diesem Fall wird das nach unten offene Montagegestell im zusammengebauten Zustand einfach auf das Dach gestellt bzw. gelegt. Das Dach verschließt dann die Unterseite. Auf diese Weise kann Verkleidungsmaterial eingespart werden.

Bei einer weiteren besonderen Ausführungsform weist das Gestell ein Modul-Trageprofil, ein Aufständerprofil und/oder ein Basisprofil auf. Diese Profile können einstückig ausgebildet sein.

Hier kommt der Gedanke des modularen Baukastens zum Tragen. Die Profile können vormontiert und eingeklappt werden, um anschließend auf der Baustelle durch einfache Klappbewegungen aufgestellt und entfaltet zu werden. Auf diese Weise ist es möglich, das Montagesystem für den Aufbau vorzubereiten und während eines Transports zur Baustelle kompakt auszubilden. Des Weiteren können verschieden lange Profile bevorratet werden, um unterschiedliche PV-Module einsetzen zu können. Üblicherweise wählt der Kunde den PV-Modul-Typ aus. Die Monteure auf der Baustelle brauchen dann nicht mehr nachzudenken, sondern bedienen sich lediglich vorkonfektionierter Elemente, um das gewünschte Montagesystem aufzubauen.

Vorzugsweise weist die PV-Moduleinheit mindestens ein PV-Modul und/oder mindestens ein Modulhalteprofil auf.

Insbesondere kann die Moduleinheit mindestens eine Adapterplatte aufweisen, die auf der Montageseite zwischen dem mindestens einen PV-Modul und dem Flachdach und/oder zwischen dem mindestens einen PV-Modul und dem Firstspalt am Gestell anbringbar ist.

Auch hier kommt wieder der modulare Gedanke zum Tragen. In Abhängigkeit vom gewählten PV-Modul-Typ (Länge) können im Bedarfsfall Adapterplatten eingesetzt werden, um die Montageseite des Gestells abzudecken und lediglich, sofern es gewünscht ist, einen Fußspalt offen zu lassen.

Weiter ist es von Vorteil, wenn die Spalten parallel zueinander orientiert sind.

Gemäß einer weiteren bevorzugten Ausführungsform decken die Seitenverkleidungen und der Windabweiser ihnen zugeordnete Seiten (im Wesentlichen luftdicht) ab.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: verschiedene Ansichten (Fig. 1A-1C) eines mehrmoduligen Montagesystems gemäß der Erfindung;
- Fig. 2: eine perspektivische Ansicht eines Prismas mit dreieckiger Grund- und Deckfläche;
- Fig. 3: eine perspektivische Ansicht auf einen Teil eines Montagesystems gemäß der Erfindung;
- Fig. 4: eine Seitenansicht (Fig. 4A) eines Montagesystems gemäß der Erfindung und eine Detailansicht (Fig. 4B) des mit IV-B in der Fig. 4A bezeichneten Kreises;
- Fig. 5: eine Detailansicht eines abgewandelten Montagesystems gemäß der Erfindung ähnlich Fig. 4B; und
- Fig. 6: ein Diagramm zur Verdeutlichung einer Abhängigkeit des aerodynamischen Effekts von einer Einfallsrichtung eines Luftstroms (Windes).

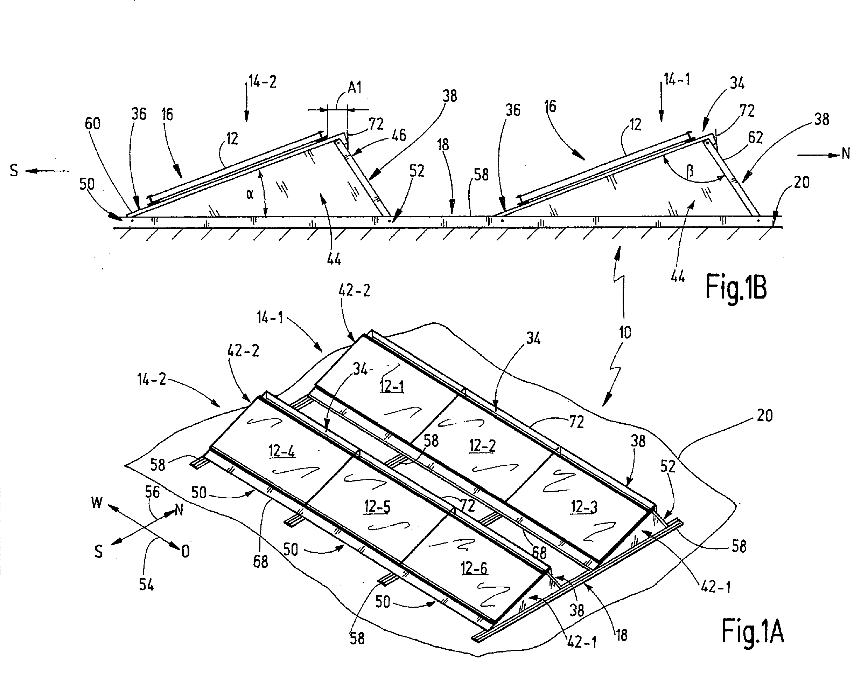

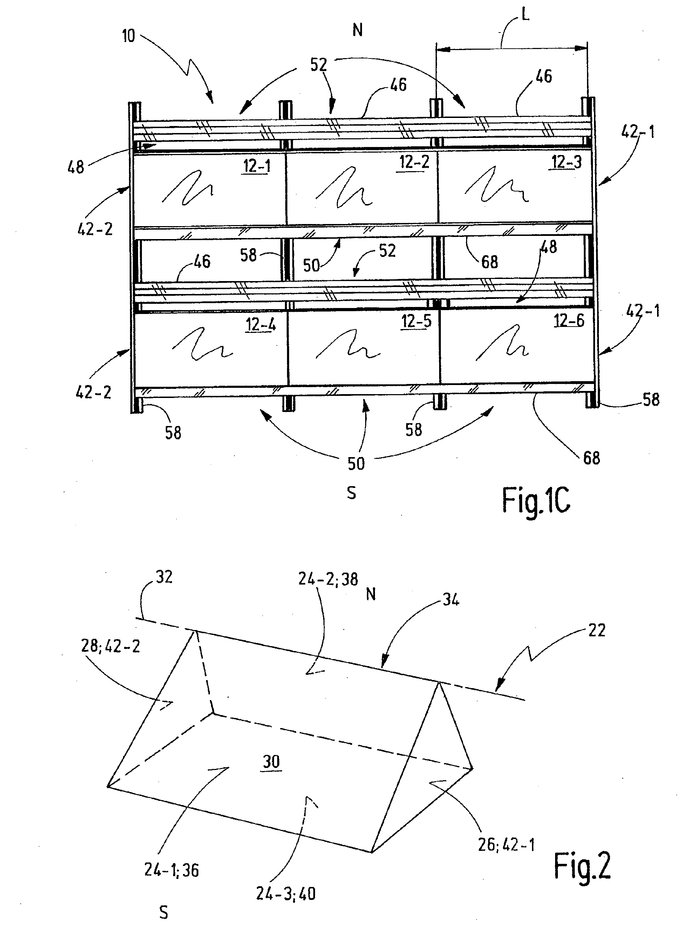

Die vorliegende Erfindung betrifft ein Montagesystem 10, das nachfolgend unter gemeinsamer Bezugnahme auf die Figuren 1A bis 1C in Kombination mit der Fig. 2 beschrieben werden wird. Die Fig. 1A zeigt eine perspektivische Ansicht auf das Montagesystem 10 von schräg oben. Die Fig. 1B zeigt eine Seitenansicht des Montagesystems 10 der Fig. 1A entlang einer Ost-West-Richtung. Die Fig. 1C zeigt eine Draufsicht auf das Montagesystem 10 der Figuren 1A und 1B in einer Nord-Süd-Richtung. Fig. 2 zeigt eine mögliche Grundform des Montagesystems 10 der Fig. 1 in Form eines Prismas. Ein Prisma ist ein geometrischer Körper, der ein Vieleck als Grundfläche hat und dessen Seitenkanten parallel und üblicherweise gleich lang sind. Ein Prisma entsteht durch Parallelverschiebung des Vielecks entlang einer nicht in dieser Ebene liegenden Geraden im Raum und ist daher ein spezielles Polyeder. Die meisten Prismen haben ein Dreieck als Grund- und Deckfläche, wie es nachfolgend noch genauer erläutert werden wird. Andere Formen basieren auf z.B. einem Vier- oder einem Fünfeck.

Das Montagesystem 10 der Fig. 1 ist zum Halten von zumindest einem PV-Modul 12 ausgelegt, das rahmenlos oder mit einem Rahmen versehen sein kann. Das Montagesystem 10 der Fig. 1 umfasst exemplarisch sechs PV-Module 12-1 bis 12-6. Die PV-Module 12 können in beliebig vielen Reihen 14 nebeneinander und/oder hintereinander angeordnet werden. In der Fig. 1A sind exemplarisch zwei Reihen 14-1 und 14-2 hintereinander gezeigt. Die erste Reihe 14-1 weist die Module 12-1 bis 12-3 auf. Die zweite Reihe 14-2 weist die Module 12-4 bis 12-6 auf. Die Module 12-1 bis 12-3 und 12-4 bis 12-6 sind nebeneinander in einer Ost-West-Richtung angeordnet. Die Reihen 14-1 und 14-2 erstrecken sich parallel zueinander. Die Reihen 14-1 und 14-2 sind in einer Nord-Süd-Richtung derart zueinander beabstandet, dass eine Aufstellfläche, wie z.B. ein (Flach-)Dach 20, möglichst optimal ausgenutzt wird, das heißt so viel wie möglich PV-Module 12 auf dem Dach 20 platziert werden, und dass Windschatteneffekte durch benachbarte PV-Module möglichst gering sind.

Die PV-Module 12 sind Teil von (hier zwei) PV-Moduleinheiten 16, die in der Fig. 1B angedeutet sind. Die PV-Moduleinheiten 16 weisen neben den PV-Modulen 12 weitere Elemente auf, wie es nachfolgend noch näher erläutert werden wird. Die PV-Moduleinheiten 16 sind an, auf und/oder in einem Gestell 18 befestigt, das auf das Dach 20 aufgelegt wird. Zwischen dem Gestell 18 und dem Dach 20 können schützende (Isolier-)Matten ausgelegt werden, die in der Fig. 1 nicht gezeigt sind. Üblicherweise handelt sich bei den Dächern 20 um so genannte "Flachdächer", das heißt, Dächer, die im Wesentlichen eben sind und keine Stufen oder ähnliche Unebenheiten aufweisen. Ein gestuftes Flachdach entspricht aber einer Mehrzahl von einfachen Flachdächern auf unterschiedlichen Niveaus. Stufen, Absätze und Ähnliches können z.B. dadurch überbrückt werden, dass die Basisprofile 58 mittels (nicht dargestellten) Verbindungselementen verbunden werden, wenn die Basisprofile auf unterschiedlichen Höhenniveaus hintereinander ausgelegt sind. Die Verbindungselemente sind dann entsprechend geformt, z.B. in der Gestalt eines L- oder S-förmigen Winkels. Das Gestell 18 dient im Wesentlichen dazu, die PV-Module 12 gegenüber einer Horizontalen in einem Anstellwinkel Alpha (vgl. Fig. 1B) anzustellen, um den Wirkungsgrad der stromerzeugenden Elemente des PV-Moduls 12 zu maximieren. In Europa bewegt sich der Neigungswinkel Alpha in einem Bereich zwischen 10° und 25° und ist abhängig vom geografischen Breitengrad.

Das Gestell 18 weist die (geometrische) Form eines Prismas auf. In Fig. 2 ist ein Prisma 22 perspektivisch verdeutlicht. Das Prisma 22 weist aneinander grenzende Mantelflächen 24, eine Grundfläche 26 und eine Deckfläche 28 auf. Die Grund- und Deckflächen 26 und 28 sind üblicherweise kongruent und exemplarisch dreieckig. Die Mantelflächen 24 umgeben gemeinsam mit der Grundfläche 26 und der Deckfläche 28 ein (geschlossenes) Volumen 30 des Prismas 22. Das Volumen 30 wird nachfolgend auch als "Inneres" des Prismas 22 bzw. des Gestells 18 bezeichnet werden.

Im oberen Bereich des Prismas 22 der Fig. 2 ist eine (Schnitt-)Linie 32 gezeigt, die einen First 34 definiert. Der First 34 liegt in einem Bereich, wo sich eine Montageseite 36 und eine Rückseite 38 des Gestells 18 schneiden. Das Gestell 18 definiert im Wesentlichen die Kanten des Prismas 22 der Fig. 2. Die Montageseite 36 des Gestells 18 entspricht einer ersten Mantelfläche 24-1 des Prismas 22. Eine Mantelfläche 24-2 des Prismas 22 entspricht der Rückseite 38 des Gestells 18. Die letzte in der Fig. 2 gezeigte Mantelfläche 24-3 des Prismas 22 entspricht einer Unterseite 40 des Gestells 18. Die Grund- und Deckflächen 26 und 28 des Prismas 22 entsprechen Stirnseiten 42-1 und 42-2 (vgl. Fig. 1A) des Gestells 18.

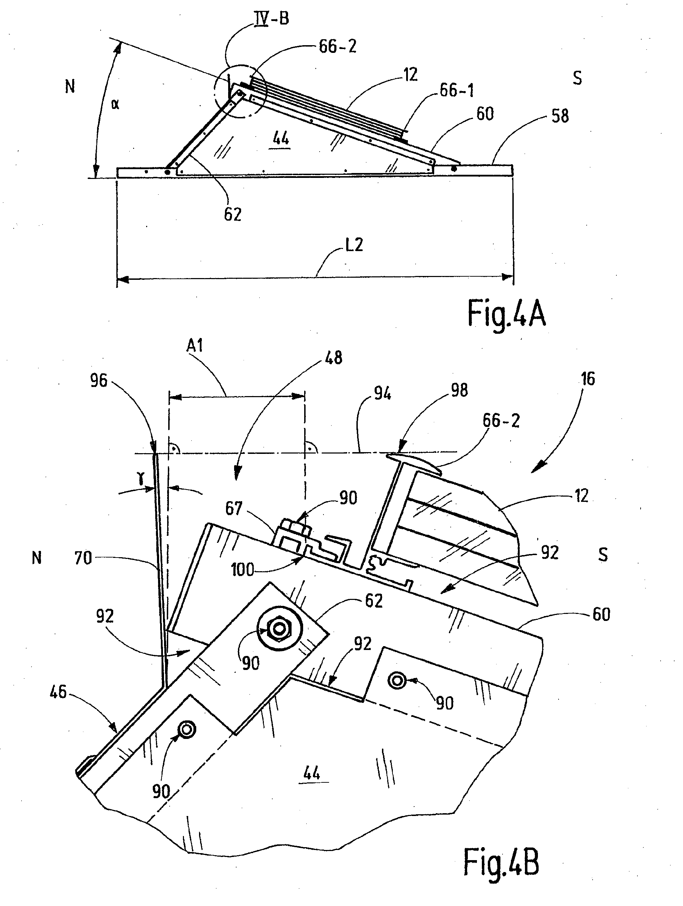

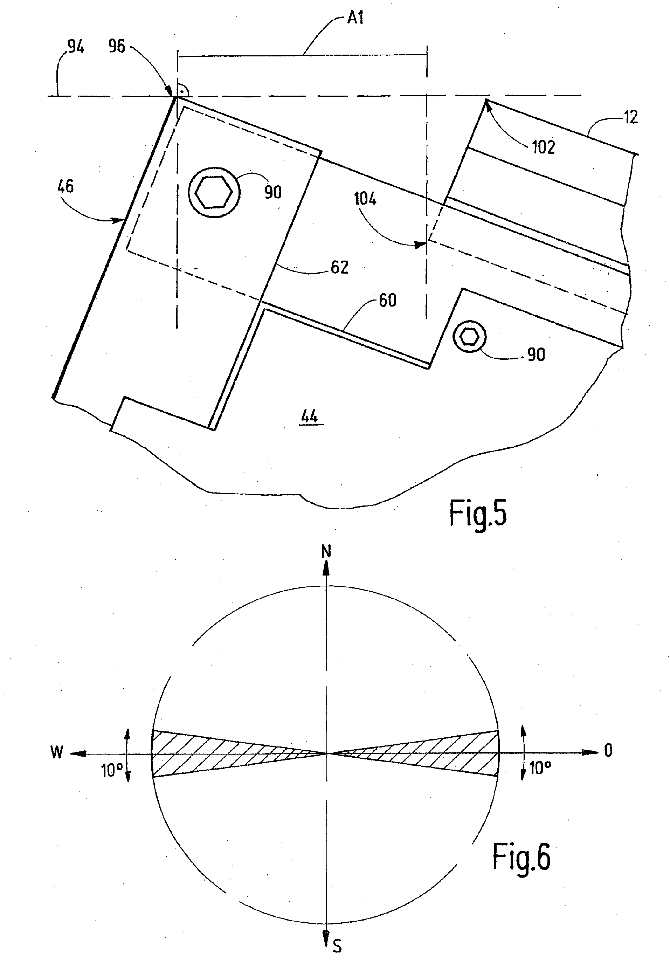

Entlang der Montageseite 36 des Gestells 18 werden die PV-Module 12 bzw. PV-Moduleinheiten 16 montiert. Die Montageseite 36 ist im Wesentlichen durch die PV-Moduleinheit 16 abgedeckt. Lediglich in einem Fußbereich einer Vorderkante der Montageseite 36 kann die Montageseite 36 offen ausgebildet sein. An den Stirnseiten 42 des Gestells 18 werden Seitenverkleidungen 44, vorzugsweise nahezu luftdicht, angebracht, wie es nachfolgend noch näher ausgeführt werden wird. An der Rückseite 38 wird ein Windabweiser 46 angebracht, der die Funktion eines (Auto-)Spoilers hat, wie es ebenfalls nachfolgend noch näher erläutert werden wird. Zwischen der Montageseite 36 und der Rückseite 38 bzw. zwischen der PV-Moduleinheit 16 und dem Windabweiser 46 erstreckt sich in der Querrichtung des Gestells 18, die in der Fig. 1 parallel zur Ost-West-Ausrichtung 54 (vgl. Fig. 1A) orientiert ist, ein Firstspalt 48, der besonders gut in der Draufsicht der Fig. 1C zu erkennen ist. Der Firstspalt 48 weist eine im Wesentlichen rechteckige (projizierte) Fläche A1 auf, wie es nachfolgend unter Bezugnahme auf Fig. 4B und Fig. 5 noch näher erläutert werden wird. Der Firstspalt 48 kann sich aus mehreren Einzelfirstspalten zusammensetzen, wie es in Fig. 1C gut zu erkennen ist. In der Fig. 1C sind zwei Firstspalte 48 gezeigt, die sich zwischen den Modulen 12-1 bis 12-3 bzw. 12-4 bis 12-6 und dem jeweils zugehörigen Windabweiser 46 in Form von jeweils drei aneinandergereihten Einzelfirstspalten erstrecken. Die beiden Firstspalte 48 setzen sich tatsächlich aus jeweils drei einzelnen Firstspalten zusammen, wobei jeweils ein Einzelfirstspalt einem der PV-Module 12-1 bis 12-3 bzw. 12-4 bis 12-6 zugeordnet ist.

Die Unterseite 40 des Gestells 18 des Montagesystems 10 ist üblicherweise offen, das heißt nicht verkleidet. Die Unterseite 40 wird im aufgebauten Zustand des Montagesystems 10 durch das Dach 20 verdeckt. Das Montagesystem 10 wird in diesem Sinne lediglich auf das Dach 20 aufgelegt und muss nicht zusätzlich verkleidet werden. Auch muss das Montagesystem 10 der Erfindung, im Gegensatz zu vielen herkömmlichen Montagesystemen, nicht zusätzlich ballastiert werden, das heißt mit zusätzlichen Gewichten ausgestattet werden, um das Montagesystem 10 auf dem Dach zu halten, insbesondere bei Winden aus ungünstigen Richtungen, die zu einem Abheben der PV-Module 12 von dem Gestell 18 bzw. einem Abheben des gesamten Gestells 18 führen können.

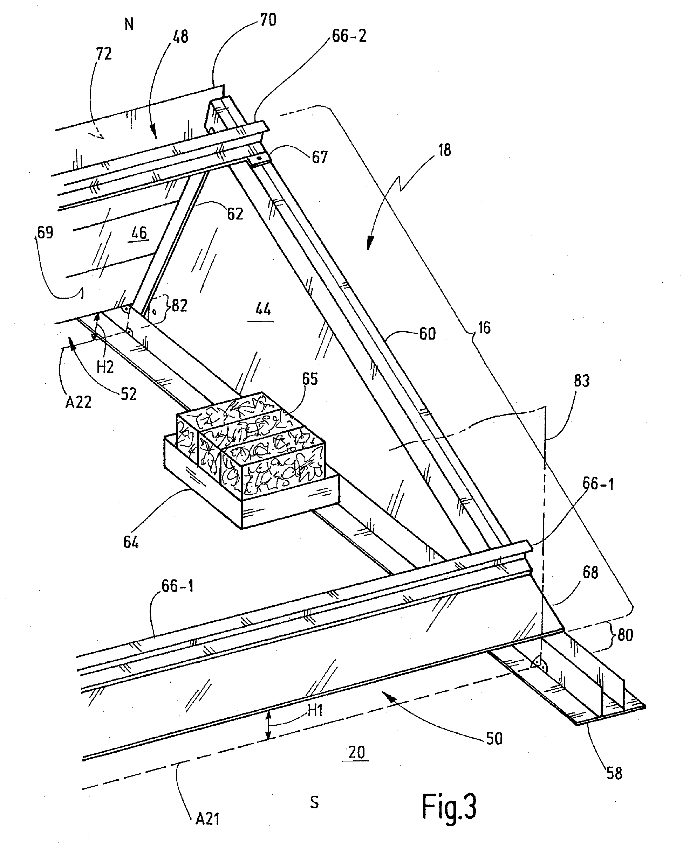

Eine zusätzliche Ballastierung ist in Fig. 3 gezeigt. Fig. 3 zeigt teilweise das Gestell 18 der Fig. 1 mit abgenommenem PV-Modul 12, so dass man in das Innere 30 blickt. Die Fig. 3 dient auch zur Veranschaulichung eines ersten Fußspalts 50 und eines zweiten Fußspalts 52. Der erste Fußspalt 50 erstreckt sich zwischen dem Dach 20 und der PV-Moduleinheit 16. Der zweite Fußspalt 52 erstreckt sich zwischen dem Windabweiser 46 und dem Dach 20. Der erste Fußspalt 50 hat hier exemplarisch eine rechtwinklige Fläche A21. Der zweite Fußspalt 52 weist eine Höhe H2 auf, die vorzugsweise gleich groß wie die Höhe H1 des ersten Fußspalts 50 ist, und weist ebenfalls eine Fläche A22 auf, die rechtwinklig ausgebildet ist. Die Fußspalten 50 und 52 verbinden das Innere 30 des Gestells 18 mit einer äußeren Umgebung. Über den Fußspalt 50 kann Luft in das Innere 30 strömen, vorausgesetzt der Wind bläst aus der richtigen Richtung, vorzugsweise aus der Nord-Süd-Richtung, die in Fig. 1A mit 56 bezeichnet ist. Die Fußspalte 50 und 52 erstrecken sich im Wesentlichen parallel zum Firstspalt 48.

Der Windabweiser 46 bewirkt, dass der Firstspalt 48 wie eine Düse wirkt, wie sie z.B. bei Wasserstrahl-Vakuumpumpen eingesetzt wird. Als weiterer Effekt tritt eine Hinterkühlung der PV-Module 12 auf. Luft strömt von den Fußspalten 50 bzw. 52 in Richtung des Firstspalts 48, und zwar in Abhängigkeit von der Windrichtung. Am Firstspalt 48 wird Luft aus dem Inneren 30 abgesaugt, sobald Wind über das Montagesystem 10 (inkl. der PV-Module 12) streicht.

Das in der Fig. 3 exemplarisch gezeigte Gestell 18 weist generell ein Basisprofil 58, ein Modul-Tragprofil 60 sowie ein Aufständerprofil 62 auf, die die Kanten der Deck- und Grundfläche repräsentieren. Das Gestell 18 kann ferner eine Ballastierungsaufnahme 64 aufweisen, in welche man z.B. Steine 65 geben kann, um das Gestell 18 zusätzlich zu beschweren. Das Basisprofil 58 weist exemplarisch einen doppel-T-förmigen Querschnitt auf und dient zur (klappbaren) Aufnahme des Tragprofils 60. Zwischen dem Tragprofil 60 und dem Basisprofil 58, welches auf das Dach 20 aufgelegt wird, ist der Neigungswinkel α (vgl. Fig. 1B) definiert. Das Tragprofil 60 kann über eine (hier nicht gezeigte) Schraube mit dem Basisprofil 58 z.B. gelenkig verbunden werden. Das Tragprofil 60 kann am Basisprofil 58 vormontiert werden. Im vormontierten Zustand kann das Tragprofil 60 zwischen den aus dem Basisprofil 58 U-förmig vorstehenden Profilschenkeln aufgenommen werden. In diesem Zustand liegt das Tragprofil 60 im Basisprofil 58 und wird auf der Baustelle um die hier nicht gezeigte Schraube herausgeschwenkt. Es sind beliebige Neidungswinkel α einstellbar.

Auf ähnliche Weise können das Aufständerprofil 62 und das Basisprofil 58 bzw. das Tragprofil 60 miteinander verbunden und/oder vormontiert werden. Diese Art der Vormontage hat den Vorteil, dass das Gestell 18 vorkonfiguriert ausgeliefert werden kann und die Montage auf der Baustelle nur durch wenige Handgriffe erfordert. Das Tragprofil 60 und das Aufständerprofil 62 umschließen im montierten Zustand einen Winkel β (vgl. auch Fig. 1B), der vorzugsweise stumpf ist, um zu vermeiden, dass das Montagesystem 10 bei Wind aus Norden N untergriffen wird.

Es versteht sich, dass die Längen der Profile 58, 60 und 62 variiert werden können. So kann z.B. ein einziges Basisprofil 58 zur Montage mehrerer Reihen 14 hintereinander (vgl. Fig. 1A) verwendet werden. Über die Längen der Profile 60 und 62 lassen sich die Winkel α und β wählen und vorkonfigurieren. Die Länge des Profils 60 hängt im Wesentlichen von der Länge des verwendeten PV-Moduls 12 ab.

In Fig. 3 sind Komponenten der PV-Moduleinheit 16 gut zuerkennen. Die PV-Moduleinheit 16 kann neben dem hier nicht dargestellten zumindest einen PV-Modul 12 eine oder mehrere Modul-Halteprofile 66 aufweisen, die vorzugsweise in der Querrichtung (Ost-West-Richtung in Fig. 1) mit dem Gestell 18 verbunden werden. Die Anmelderin vertreibt unter der Bezeichnung "AluTecc" ein PV-Modul-Einlegesystem mit Halteprofilen 66 der in den Figuren 3 und 4B gezeigten Art. Die Halteprofile 66 können z.B. mit Klemmen 67 an den Modul-Tragprofilen 60 befestigt werden.

Zusätzlich kann die PV-Moduleinheit 16 ein oder mehrere Adapterplatten 68 aufweisen, die entweder oben oder unten an das PV-Modul 12 und/oder die Halteprofile 66 angrenzend vorgesehen werden. In der Fig. 3 ist exemplarisch nur eine Adapterplatte 68 gezeigt, die an das untere Halteprofil 66-1, vorzugsweise luftdicht, angrenzt. Das untere Halteprofil 66-1 kann einstückig mit der Adapterplatte 68 ausgebildet sein. Die Adapterplatte 68 kann auch beim Firstspalt 48 an das obere Halteprofil 66-2 anschließen. Es können obere und/oder untere Adapterplatten 68 eingesetzt werden. Die Adapterplatten 68 können auch eingesetzt werden, wenn keine Halteprofile 66 zum Einsatz kommen. Die Adapterplatten 68 dienen dazu, die Montageseite 38 - mit Ausnahme des ersten Fußspalts 50 und des Firstspalts 48 - so dicht wie möglich abzudecken, um das Innere 30 des Gestells 18 gegenüber Luftzufuhr und Luftabfuhr zu schützen. Die Adapterplatten 68 können unterschiedlich lang (Nord-Süd) sein.

Der Windabweiser 46 der Fig. 3 weist eine Abdeckfläche 69 mit daran anschließendem Spoiler 70 mit Spoilerfläche 72 auf. Die Abdeckfläche 69 erstreckt sich entlang der Rückseite 38 und deckt diese im Wesentlichen ab. Die Abdeckfläche 69 ist parallel zur Rückseite 38 orientiert. Der Spoiler 70 mit seiner Spoilerfläche 72 steht aus der Rückseite 38 vor, wie es unter Bezugnahme auf Fig. 4B noch genauer erläutert werden wird.

Der erste Fußspalt 50 und/oder der zweite Fußspalt 52 sind jeweils in einem unteren Bereich 80 bzw. 82 der Vorderseite 36 bzw. der Rückseite 38 angeordnet. Der erste Fußspalt 50 und/oder der zweite Fußspalt 52 können (luftdicht) verschlossen sein. Der Inhalt der Flächen A21 und A22 bestimmt sich aus dem Produkt der entsprechenden Höhe H1 oder H2 mit einer Länge L (vgl. Fig. 1C) der Module 12. Die Länge L des Spalts 50 oder 52 kann durch (nicht dargestellte) Spaltadapterplatten variiert werden, die (nachträglich) in den Spalt 50, 52 gesteckt werden. Im bisher erläuterten Beispiel weist sowohl die erste Fläche A21 als auch die zweite Fläche A22 jeweils einen Flächeninhalt von 3HxL auf. Die Flächen(inhalte) A21 und A22 werden in einer (imaginären) Ebene gemessen, die senkrecht zur Ebene des Dachs 20 orientiert ist.

Bezug nehmend auf die Figuren 4A und 4B ist eine Gestellreihe 14 bzw. ein Einzelgestell 18 in einer Seitenansicht (Fig. 4A) und einer Detailansicht (Fig. 4B) gezeigt, wobei die Detailansicht der Fig. 4B in der Fig. 4A mit einem Kreis verdeutlicht ist, der mit "IV-B" bezeichnet ist. In der Fig. 4A blickt man aus westlicher Richtung in Richtung Osten. In der Fig. 4A ist die Seitenverkleidung 44 gut zu erkennen. Die Seitenverkleidung 44 deckt die Stirnseite 42-2 so gut wie möglich ab.

In Fig. 4B ist gezeigt, dass die Seitenverteilung 44 mittels Schraubverbindungen 90 (Schraube-Mutter/Schraube-Unterlegscheibe-Mutter) mit den Profilen 60 und 62 verbunden ist. Zwischen den Profilen 60 bzw. 62 und der Seitenverkleidung 44 können (Luft-)Spalte 92 vorhanden sein, die aber im Hinblick auf die Aerodynamik vernachlässigbar sind. Die Seitenverkleidung 44 verdeckt die Stirnseite 42 in diesem Sinne "im Wesentlichen". Ähnliches gilt für den Windabweiser 46 und die PV-Moduleinheit 16 hinsichtlich einer Abdeckung der Rückseite 38 bzw. bzw. der Montageseite 36. Auch zwischen dem PV-Modul 12 und dem Modul-Tragprofil 60 können Spalte 92 vorhanden sein. Die in der Fig. 4B gezeigten Spalte 92 kommen allenfalls zum Tragen, wenn der Wind aus Ost oder West über das Montagesystem 10 bläst. Bläst dieser Wind genau aus diesen Richtungen - und somit eventuell auch in das Innere 30 des Gestells 18 - existiert nahezu kein aerodynamischer Effekt, wie es im Zusammenhang mit Fig. 6 noch näher erläutert werden wird.

Die Profile 60 und 62 können ebenfalls gelenkig mit einer Schraubverbindung 90 miteinander verbunden sein. Gleiches gilt für die Fixierung des oberen Halteprofils 66-2 am Profil 60 über die Klemme 67.

In Fig. 4B ist ferner eine (horizontale) Hilfslinie 94 gezeigt, die parallel zum (nicht dargestellten) Dach 20 orientiert ist. Die Hilfslinie 94 repräsentiert einen der Basisvektoren einer Ebene, die sich parallel zum Dach 20 erstreckt. Eine obere Kante 96 des Spoilers 70 sowie eine obere Kante 98 der PV-Moduleinheit 16 (hier in Form des oberen Halteprofils 66-2) liegen in dieser zum Dach 20 parallelen Ebene. Die oberen Kanten 96 und 98 definieren einen Öffnungsmund des Firstspalts 48, dessen Projektion sich zwischen einer oberen Kante 100 des oberen Halteprofils 66-2 und dem Spoiler 70 erstreckt. Der Dachfirst 48 bzw. dessen Fläche A1 ist durch eine Projektion aus einer Richtung senkrecht zum Dach 20 auf das Dach 20 definiert. Der Flächeninhalt des Firstspalts 48 entspricht im Wesentlichen dem Produkt aus der Länge L eines Moduls 12 und einer Spaltbreite, die sich zwischen den beiden vertikal in der Fig. 4B eingezeichneten Hilfslinien erstreckt. Dieses Produkt wird mit der Anzahl von PV-Modulen 12 einer Reihe 14 multipliziert, um den gesamten Flächeninhalt des Firstspalts 48 zu berechnen.

Die Erfinder haben erkannt, dass es im Inneren 30 des Gestells 18 zu einem Unterdruck (Sog) kommt, wenn die Fläche A1 des Firstspalts 48 größer als die Summe der Flächeninhalte A21 und A22 der Fußspalten 50 und 52 ist. Dabei spielt es keine Rolle, ob ein, zwei oder keine Fußspalte vorgesehen sind. Unter der eben genannten Bedingung tritt der so genannte Venturi-Effekt auf. Streicht Wind über das Montagesystem 10, vorzugsweise aus Richtung Süden oder Norden, wird der Unterdruck maximal und die Module 12 werden in Richtung des Dachs 12 belastet. Anstatt die Module 12 auszuheben, werden die Module 12 bei Wind also zusätzlich auf das Dach 20 gepresst. Dadurch kann auf zusätzliche Ballastierung, wie z.B. auf die Steine 65 in der Fig. 3, verzichtet werden. Man spricht in diesem Zusammenhang von keiner oder geringer zusätzlicher Ballastierung des Montagesystems 10.

Die Erfinder haben ferner erkannt, dass die relative Anordnung der oberen Kanten 96 und 98 in der Ebene 94 parallel zum Dach Vorteile bringt.

Fig. 5 zeigt eine ähnliche Darstellung wie Fig. 4B. In Fig. 5 erstreckt sich der Windabweiser 46 - ohne Spoiler 70 - vollständig entlang der Rückseite 38, die durch das Profil 62 definiert ist. Es gibt in diesem Sinne also keine abstehende Spoilerfläche 72. Die obere Kante 96 des Windabweisers 46 ist durch die Abdeckfläche 69 definiert. Die obere Kante 96 definiert auch die äußere Randlinie der senkrechten Projektion des Firstspalts 48 auf das Dach 20. In der Fig. 4B war dieser äußere Rand durch eine nicht näher bezeichnete untere Kante des Spoilers 70 definiert. Die gegenüberliegende Kante der Projektion wird durch eine Abschlusskante 104 des Moduls 12 definiert. Das Modul 12 der Fig. 1 bildet im Wesentlichen die PV-Moduleinheit 16. Modul-Halteprofile 66 sind hier nicht vorgesehen. Das Modul 12 taucht in Montageseite 36 ein. Die Abschlusskante 104 des Moduls 12 definiert in der Projektion eine Kante des Firstspalts 34. Die obere Kante 102 des Moduls 12 definiert dabei aber die Lage der Ebene 94, die sich parallel zum Dach 20 erstreckt.

Fig. 6 zeigt grafisch die Abhängigkeit des sich durch Wind ausbildenden Sogeffekts. Wenn der Wind aus Norden oder Süden bläst, wird der Unterdruck im Inneren des Gestells 18 maximal (weiße Fläche im Kreis). Bläst der Wind aus Ost oder West, das heißt im Wesentlichen parallel zur Längserstreckung des Firstspalts 48, wird der Sogeffekt minimal. Dies ist in der Fig. 6 durch eine schraffierte Fläche angedeutet, die sich um die Ost- bzw. West-Richtung erstreckt. Jede der dreieckig schraffierten Flächen weist ungefähr einen Öffnungswinkel von 10° auf.

In der oben stehenden Beschreibung der Figuren hat man sich bei der Wahl der Orientierungen der Koordinatensysteme an eine Nord-Süd-Ausrichtung (Längsrichtung des Montagesystems 10) bzw. eine Ost-West-Ausrichtung (Querrichtung des Montagesystems 10) angelehnt.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

Unter dem Begriff "im Wesentlichen abgedeckt" wird verstanden, dass die entsprechende Seite des Prismas 22 bzw. des Gestells 18 nicht absolut luftdicht abgedeckt sein muss. Es dürfen kleinere Spalte 92 in Längs- oder Querrichtung vorhanden sein, solange die entsprechenden Seiten bzw. Flächen überwiegend abgedeckt sind.

Es versteht sich, dass die Fußspalten 50 und 52 nicht unbedingt an das Dach 20 angrenzen müssen. So ist es z.B. auch möglich, den unteren Bereich 80 der Montageseite 36, der an das Dach 20 unmittelbar angrenzt, nahezu luftdicht zu verschließen und den ersten Fußspalt 50 zwischen zwei Adapterplatten 68 zu definieren, die z.B. zwischen dem Dach 20 und der unteren Halteschiene 66-1 angeordnet sind. Ähnliches gilt für den zweiten Fußspalt 52 an der Rückseite 38 des Gestells 18. Wenn die Ebenen der Fußspalte 50 und/oder 52 parallel zur Montageseite 30 und/oder Rückseite 38 liegen, so kommt es bei der Bestimmung der Spaltgröße (Flächeninhalt) A21 und A22 auf die Projektionsfläche an, die man erhält, wenn man die Spalte 50 und/oder 52 auf eine Ebene abbildet, die senkrecht zur Ebene des Daches 20 steht. Die Spalten 48, 50 und 52 sind vorzugsweise parallel zueinander orientiert.

## Patentansprüche

1. Montagesystem (10) zur Positionierung von mindestens einem Photovoltaik-(PV-)Modul (12) einer PV-Moduleinheit (16) auf einem ebenen Flachdach (20) in einer relativ zu dem Flachdach (20) in einem Winkel (Alpha) geneigten Stellung, mit:
einem Gestell (18), wobei das Gestell (18) eine PV-Moduleinheit-Montageseite (36), eine Rückseite (38), zwei Stirnseiten (42) und eine Unterseite (40) definiert, die gemeinsam ein Prisma (22) definieren, dessen Grundfläche (26) einer der Stirnseiten (42-1) entspricht, dessen Deckfläche (28) der anderen Stirnseite (42-2) entspricht und dessen Mantelflächen (24) der Montageseite (36), der Rückseite (38) und der Unterseite (40) entsprechen, wobei die Montageseite (36) und die Rückseite (38) einen vorzugsweise stumpfen Winkel (Beta) einschließen, wobei sich die Montageseite (36) und die Rückseite (38) entlang einer imaginären Schnittlinie (32) schneiden, die einen First (34) definiert, der der Unterseite (40) gegenüber liegt, und wobei die Unterseite (40) in einem installierten Zustand des Montagesystems (10) dem Flachdach (20) gegenüber liegt;
einer Seitenverkleidung (44) für jede der Stirnseiten (42), wobei jede der Seitenverkleidungen (44) die zugehörige Stirnseite (42) abdeckt;
einem Windabweiser (46), der an der Rückseite (38) angebracht ist und der die Rückseite (38) abdeckt;
**dadurch gekennzeichnet, daß** im Bereich des Firsts (34) zwischen dem Windabweiser (46) und der PV-Moduleinheit (16), wenn die PV-Moduleinheit (16) an der Montageseite (36) angebracht ist, ein offener Firstspalt (48) ausgebildet ist, der ein Inneres (32) des Prismas (22) mit einer äußeren Umgebung des Prismas (22) verbindet, wobei eine senkrechte Projektion (A1) des Firstspalts (48) auf das Flachdach (20) einen ersten Flächeninhalt definiert;
wobei in einem unteren Bereich (80) der Montageseite (36) zwischen dem Flachdach (20) und der angebrachten PV-Moduleinheit (16) ein erster offener Fußspalt (50) ausgebildet ist und/oder in einem unteren Bereich (82) der Rückseite (38) zwischen dem Flachdach (20) und dem Windabweiser (46) ein zweiter offener Fußspalt (52) ausgebildet ist, wobei eine senkrechte Projektion (A21, A22) jedes Fußspalts (50, 52) auf eine erste imaginäre Ebene (83), die senkrecht zum Flachdach (20) orientiert ist, jeweils einen zweiten Flächeninhalt definiert;
wobei der erste Flächeninhalt mindestens so groß wie eine Summe von allen zweiten Flächeninhalten ist; und
wobei eine Oberkante (96) des Windabweisers (46) und eine Oberkante (98; 102) der PV-Moduleinheit (16) in einer zweiten imaginären Ebene (94) liegen, die parallel zum Flachdach (20) orientiert ist.

2. Montagesystem nach Anspruch 1, wobei der Windabweiser (64) eine Abdeckfläche (69) und einen Spoiler (70) mit einer Spoilerfläche (72) aufweist, **dadurch gekennzeichnet, daß** sich die Spoilerfläche (72) an die Abdeckfläche (69) anschließt und abgewinkelt zur Rückseite (38) orientiert ist, so dass die Spoilerfläche (72) aus der Rückseite (38) vorsteht.

3. Montagesystem nach Anspruch 2, **dadurch gekennzeichnet, daß** die Spoilerfläche (72) im installierten Zustand des Montagesystems (10) im Wesentlichen senkrecht zum Flachdach (20) orientiert ist.

4. Montagesystem nach einem der Ansprüche 1 bis 3, **dadurch gekennzeichnet, daß** die Stirnseiten (42) im Wesentlichen dreieckig sind.

5. Montagesystem nach einem der Ansprüche 1 bis 4, **dadurch gekennzeichnet, daß** die Stirnseiten (42) parallel zueinander orientiert sind.

6. Montagesystem nach einem der Ansprüche 1 bis 5, **dadurch gekennzeichnet, daß** die Unterseite (40) offen ist.

7. Montagesystem nach einem der Ansprüche 1 bis 6, **dadurch gekennzeichnet, daß** das Gestell (18) aufweist: ein Modul-Tragprofil (60), ein Aufständerprofil (62) und/oder ein Basisprofil (58).

8. Montagesystem nach einem der Ansprüche 1 bis 7, **dadurch gekennzeichnet, daß** die PV-Moduleinheit (16) das mindestens eine PV-Modul (12) und/oder mindestens ein Modul-Halteprofil (66) aufweist.

9. Montagesystem nach einem der Ansprüche 1 bis 8, **dadurch gekennzeichnet, daß** die PV-Moduleinheit (16) mindestens eine Adapterplatte (68) aufweist, die auf der Montageseite (36) zwischen dem mindestens einen PV-Modul (12) und dem Flachdach (20) und/oder zwischen dem mindestens einen PV-Modul (12) und dem Firstspalt (34) am Gestell (18) anbringbar ist.

10. Montagesystem nach einem der Ansprüche 1 bis 9, **dadurch gekennzeichnet, daß** die Spalten (48, 50, 52) parallel zueinander orientiert sind.

11. Montagesystem nach einem der Ansprüche 1 bis 10, **dadurch gekennzeichnet, daß** die Seitenverkleidung (44) und der Windabweiser (46) ihnen zugehörige Seiten (42, 38) im Wesentlichen luftdicht abdecken.

## Claims

1. A mounting system (10) for positioning at least one photovoltaic (PV) module (12) of a PV-module unit (16) on a planar flat roof (20) in an inclined position having an angle (alpha) relative to the flat roof (20), comprising:
a frame (18), wherein the frame (18) defines a PV-module unit mounting side (36), a back side (38), two lateral sides (42), and a bottom side (40), which commonly define a prism (22), the base area (26) of which corresponds to one of the lateral sides (42-1), the cover area (28) of which corresponds to the other one of the lateral sides (42-2), and a jacket area (24) of which corresponds to the mounting side (36), the back side (38) and the bottom side (40), wherein the mounting side (36) and the back side (38) enclose a, preferably obtuse, angle (Beta), wherein the mounting side (36) and the back side (38) intersect along an imaginary line of intersection (32), which defines a ridge (34) being arranged oppositely to the bottom side (40), and wherein the bottom side (40) is arranged, in an installed state of the mounting system (10), oppositely to the flat roof (20);
a side-covering (44) for each of the lateral sides (42), wherein each of the side-coverings (44) covers the associated lateral side (42);
a wind deflector (46) attached to the back side (38) and covering the back side (38);
**characterized in that** in a region of the ridge (34) between the wind deflector (46) and the PV-module unit (16), if the PV-module unit (16) is attached to the mounting side (36), an open ridge gap (48) is formed connecting an interior (32) of the prism (22) to an outer environment of the prism (22), wherein a perpendicular projection (A1) of the ridge gap (48) onto the flat roof (20) defines a first area;
wherein in a lower region (80) of the mounting side (36) between the flat roof (20) and the attached PV-module unit (16) a first open foot gap (50) is formed and/or in a lower region (82) of the back side (38) between the flat roof (20) and the wind deflector (46) a second open foot gap (52) is formed, wherein a perpendicular projection (A21, A22) of each of the foot gaps (50, 52) onto a first imaginary plane (83), which is oriented perpendicular to the flat roof (20), respectively defines a second area;
wherein the first area is at least as great as a sum of all of the second areas; and
wherein an upper edge (96) of the wind deflector (46) and an upper edge (98; 102) of the PV-module unit (16) are arranged in a second imaginary plane (94), which is oriented parallel to the flat roof (20).

2. The mounting system of claim 1, wherein the wind deflector (64) comprises a cover area (69) and a spoiler (70) having a spoiler area (72), **characterized in that** the spoiler area (72) is arranged adjacent to the cover area (69) and is oriented in an angle relative to the back side (38) so that the spoiler area (72) protrudes from the back side (38).

3. The mounting system of claim 2, **characterized in that** the spoiler area (72) is oriented substantially perpendicular relative to the flat roof (20) in an installed state of the mounting system (10).

4. The mounting system of any of the claims 1 to 3, **characterized in that** the lateral sides (42) are substantially triangular.

5. The mounting system of any of the claims 1 to 4, **characterized in that** the lateral sides (42) are oriented parallel to each other.

6. The mounting system of any of the claims 1 to 5, **characterized in that** the bottom side (40) is open.

7. The mounting system of any of the claims 1 to 6, **characterized in that** the frame (18) comprises: a module-support section (60), a set-up section (62), and/or a base section (58).

8. The mounting system of any of the claims 1 to 7, **characterized in that** the PV-module unit (16) comprises the at least one PV module (12) and/or at least one module-support section (66).

9. The mounting system of any of the claims 1 to 8, **characterized in that** the PV-module unit (16) comprises at least one adapter pilate (68) attachable to the frame (18) on the mounting side (36) between the at least one PV module (12) and the flat roof (20) and/or between the at least one PV module (12) and the ridge gap (34).

10. The mounting system of any of the claims 1 to 9, **characterized in that** the gaps (48, 50, 52) are oriented parallel to each other.

11. The mounting system of any of the claims 1 to 10, **characterized in that** the side-covering (44) and the wind deflector (46) cover sides (42, 38), which are associated therewith, substantially air tight.

## Revendications

1. Système de montage (10) pour le positionnement d'au moins un module photovoltaïque (PV) (12) d'une unité modulaire PV (16) sur un toit plat et plan (20) dans une position inclinée suivant un certain angle (alpha) par rapport au toit plat (20), camprenant :
un bâti (18), le bâti (18) définissant un côté de montage (36) de l'unité modulaire PV, un côté arrière (38), deux côtés frontaux (42) et un côté inférieur (40), qui définissent ensemble un prisme (22), dont la surface de base (26) correspond à l'un des côtés frontaux (42-1), dont la surface de recouvrement (28) correspond à l'autre côté frontal (42-2) et dont les surfaces d'enveloppe (24) correspondent au côté de montage (36), au côté arrière (38) et au côté inférieur (40), le côté de montage (36) et le côté arrière (38) formant un angle de préférence obtus (bêta), le côté de montage (36) et le côté arrière (38) se coupant le long d'une ligne d'intersection imaginaire (32) qui définit un faîte (34), qui est opposé au côté inférieur (40), et le côté inférieur (40), dans un état installé du système de montage (10), étant opposé au toit plat (20) ;
un habillage latéral (44) pour chacun des côtés frontaux (42), chacun des habillages latéraux (44) recouvrant le côté frontal associé (42) ;
un déflecteur de vent (46) qui est monté sur le côté arrière (38) et qui recouvre le côté arrière (38) ;
**caractérisé en ce que**, dans la région du faîte (34) entre le déflecteur de vent (46) et l'unité modulaire PV (16), lorsque l'unité modulaire PV (16) est montée sur le côté de montage (36), est réalisée une fente de faîte ouverte (48) qui relie un intérieur (32) du prisme (22) avec un environnement extérieur du prisme (22), une projection verticale (A1) de la fente de faîte (48) définissant sur le toit plat (20) une première superficie ;
une première fente de base ouverte (50) étant réalisée dans une région inférieure (80) du côté de montage (36) entre le toit plat (20) et l'unité modulaire PV (16) montée et/ou une deuxième fente de base ouverte (52) étant réalisée dans une région inférieure (82) du côté arrière (38) entre le toit plat (20) et le déflecteur de vent (46), et une projection verticale (A21, A22) de chaque fente de base (50, 52) définissant, sur un premier plan imaginaire (83) qui est orienté perpendiculairement au toit plat (20), à chaque fois une deuxième superficie ;
la première superficie étant au moins aussi grande qu'une somme de toutes les deuxièmes superficies ; et
une arête supérieure (96) du déflecteur de vent (46) et une arête supérieure (98; 102) de l'unité modulaire PV (16) étant situées dans un deuxième plan imaginaire (94) qui est orienté parallèlement au toit plat (20).

2. Système de montage selon la revendication 1, dans lequel le déflecteur de vent (64) présente une surface de recouvrement (69) et un becquet (70) avec une surface de becquet (72), **caractérisé en ce que** la surface de becquet (72) se raccorde à la surface de recouvrement (69) et est orientée de manière inclinée par rapport au côté arrière (38) de telle sorte que la surface de becquet (72) fasse saillie depuis le côté arrière (38).

3. Système de montage selon la revendication 2, **caractérisé en ce que** la surface de becquet (72), dans l'état installé du système de montage (10), est orientée essentiellement perpendiculairement au toit plat (20).

4. Système de montage selon l'une quelconque des revendications 1 à 3, **caractérisé en ce que** les côtés frontaux (42) sont essentiellement triangulaires.

5. Système de montage selon l'une quelconque des revendications 1 à 4, **caractérisé en ce que** les côtés frontaux (42) sont orientés parallèlement l'un à l'autre.

6. Système de montage selon l'une quelconque des revendications 1 à 5, **caractérisé en ce que** le côté inférieur (40) est ouvert.

7. Système de montage selon l'une quelconque des revendications 1 à 6, **caractérisé en ce que** le bâti (18) présente : un profilé porteur de module (60), un profilé d'appui (62) et/ou un profilé de base (58).

8. Système de montage selon l'une quelconque des revendications 1 à 7, **caractérisé en ce que** l'unité modulaire PV (16) présente l'au moins un module PV (12) et/ou au moins un profilé de retenue de module (66).

9. Système de montage selon l'une quelconque des revendications 1 à 8, **caractérisé en ce que** l'unité modulaire PV (16) présente au moins une plaque d'adaptateur (68) qui peut être montée sur le côté de montage (36) entre l'au moins un module PV (12) et le toit plat (20) et/ou entre l'au moins un module PV (12) et la fente de faîte (34) au niveau du bâti (18).

10. Système de montage selon l'une quelconque des revendications 1 à 9, **caractérisé en ce que** les fentes (48, 50, 52) sont orientées parallèlement les unes aux autres.

11. Système de montage selon l'une quelconque des revendications 1 à 10, **caractérisé en ce que** l'habillage latéral (44) et le déflecteur de vent (46) recouvrent de manière essentiellement étanche à l'air les côtés (42, 38) qui leur sont associés.
